# EUROPEAN PATENT APPLICATION

(11) **EP 1 916 430 A1**
(43) Date of publication of application: **30.04.2008**
(21) Application number: 06388058.7
(22) Date of filing: 23.10.2006
(51) Int. Cl.: F16B 43/00, F16D 7/02, F16D 43/21, F16B 21/18, F16B 21/20

(54) **Torque transferring arrangements**

(71) Applicant: Zero-Max A/S, 8600 Silkeborg (DK)
(72) Inventor: Nilsson, Stig, 8800 Viborg (DK); Jørgensen, Tomas Melanchton, 8600 Silkeborg (DK); Rhiger, Per Schøler, 8600 Kiellerub (DK)
(74) Representative: Nielsen, Henrik Sten

(57) **Abstract**

A torque transferring arrangement (10) includes a member defining a first part and a second part and a first element (16) in frictional contact with the first part, the first element (16) defining a first maximum torque transfer limit determined by the frictional contact between the first element (16) and the first part, and a second element (20) in frictional contact with the second part, the second element (20) defining a second maximum torque transfer limit determined by the frictional contact between the second element (20) and the second part being larger than or substantially equal to the first frictional coefficient. The first element receives torque from a torque generating unit, the second element transfers torque to a torque consuming unit.

## Description

The present invention relates to torque transferring arrangements, torque transferring apparatuses, machines incorporating torque transferring arrangements and/or torque transferring apparatuses. The present invention further relates to frustro conical, constant sectional, compressive spring washers.

In machinery where an amount of torque is to be transferred through, there may arise situations where the torque being transferred is greater or larger than what the machine receiving the torque is able to withstand. Therefore, there is a need for a device, which may limit the amount of torque being transferred from a torque generating unit to a torque consuming unit.

There may also arise situations where the torque generating unit generates more torque than the torque consuming unit is able to consume, e.g. if the torque generating unit is connected to a water turbine driven by a waterfall or in a windmill, where there are large amounts of water, e.g. melting water in the spring, or strong winds during a storm causing the water turbine or windmill to rotate faster than a given design maximum. In such a situation there is a need for a device which may limit the amount of torque transferred from a torque generating unit to a torque consuming unit.

Furthermore, there may arise situations where a protection of the torque generating unit is desired, e.g. in situations where disruptions in the torque consuming device may cause damage to the torque generating device, e.g. in a situation where an electrical power generator is connected to a power supply grid, and short circuit or other disruption causes the electrical power generator to block. When the electrical power generator blocks, the torque transmitted from the torque generating unit, e.g. a steam turbine, is not able to be transferred to the electrical power generator, which in turn may cause damage to the turbine.

A first aspect of the present invention relates to a torque transferring arrangement that may include:
a member defining a first part and a second part,
a first element in frictional contact with the first part, the first element defining a first maximum torque transfer limit determined by the frictional contact between the first element and the first part,
a second element in frictional contact with the second part, the second element defining a second maximum torque transfer limit determined by the frictional contact between the second element and the second part being larger than or substantially equal to the first frictional coefficient, and
the first element receiving torque from a torque generating unit, the second element transferring torque to a torque consuming unit.

The first and second elements being in frictional contact with the member establishes an arrangement further establishing a given maximum of torque to be transferred. The frictional contact established between the first element and the member defines a first maximum torque transfer ability or limit.

The presence of the second element allows for establishing a second torque transfer limit, not necessarily different from the first. The two torque transfer limits may also be different, e.g. the first being lower than the second and vice versa.

In the presently preferred embodiment of the present invention, the second torque transfer limit is lower than the first torque transfer limit.

The two torque transfer limits is contemplated to allow the torque limiting assembly to provide protection to a torque consuming unit in a situation where an excessive amount of torque is provided by the torque generating unit, also, the torque limiting assembly is contemplated to provide protection in situations where the torque consuming device blocks thereby acting as a break, which could lead to damage on the torque generating unit or a gear connected in between. Such a situation could arise in embodiments of the torque limiting assembly is used in electrical power generator systems, where an electrical generator is driven by an engine, hydraulically, by steam, water or the like. If or when a short circuit occurs in the electrical power distribution grid in such a way as to affect the generator, the generator blocks thereby acting as a break on the torque receiving end of the system. The blockage of the electrical generator, if the torque limiting assembly was not present, could cause damage to the torque generating unit as there would be a great resistance in the axle or other torque transferring part connected in between the torque generating unit and the torque limiting assembly, e.g. a gear box. When the torque receiving unit is blocked, the torque required to drive to torque receiving unit may be larger than what the torque generating unit is able to withstand.

In normal operation the torque is transferred from the torque generating unit to the torque consuming unit, however, in fault situations, the torque may be transferred from the torque consuming unit to the torque generating unit.

A second aspect of the present invention relates to a torque transferring apparatus transferring torque from a torque generating unit to a torque consuming unit, the apparatus mechanically limiting the maximum torque transferred,
the apparatus defining a torque inlet for receiving torque from the torque generating unit and a corresponding torque outlet for transferring torque to the torque consuming unit, the apparatus comprising:
a torque transferring arrangement including:
   • a member defining a first part and a second part,
   • a first element in frictional contact with the first part, the first element defining a first maximum torque transfer limit determined by the frictional contact between the first element and the first part,
   • a second element in frictional contact with the second part, the second element defining a second maximum torque transfer limit determined by the frictional contact between the second element and the second part being larger than or substantially equal to the first frictional coefficient,
a torque transfer path being defined from the torque inlet to the torque outlet, via the torque transferring arrangement by firstly the first element, secondly the member and thirdly the second element.

As mentioned in relation to the first aspect of the present invention the torque transferring arrangement comprised within the torque transferring apparatus establishes a limit on the amount of torque that may be transferred from the torque inlet to the torque outlet. As described above, the torque transferring limit or capability is determined by the frictional contact between the first and second elements and the member.

The torque transfer path may be defined by more elements than described above, namely as will be evident from the description below, e.g. additional elements for keeping the torque transferring arrangement in place.

The size of the area of frictional contact between the member and the first element and the size of the area of frictional contact between the member and the second element may be different. The size of the areas may vary from 0,001 m² to 6,000 m², such as 0,01 m² to 10 m², such as 0,1 m² to 2 m², such as 0,5 m² to 1 m², such as 1 m² to 1,5 m², such as 0,001 m² to 0,01 m², such as 0,01 m² to 0,1 m², such as 0,1 m² to 0,5 m², such as 0,5 m² to 1 m², such as 1 m² to 2 m², such as 2 m² to 10 m², such as 10 m² to 6,000 m², preferably around 300 cm².

In a presently preferred embodiment of the present invention there have not been added any substances to the interface between the first element and the member or between the second element and the member. In alternative embodiments of the present invention friction increasing substances or frictions reducing substances may be present in the before-mentioned interfaces. Examples of such substances may be adhesives or lubricants.

It is contemplated that the frictional contact between the elements and the member may be varied by either choosing other suitable materials for the elements or the member. Alternatively, or additionally, a coating may be applied on one or more of the components. Further, the frictional contact may be defined, changed or varied by defining, changing or varying a biasing force on the elements, e.g. by a compressive spring washer. The spring washer may be adjustable so that the biasing force may be chosen depending on the application wherein the assembly or torque transfer limiting unit is used.

Furthermore, the first maximum torque transfer limit and the second maximum torque transfer limit may further determined by the frictional coefficient defined between the member and the first and second elements, respectively.

Advantageously the second maximum torque transfer limit may be 0, 1 % to 400% larger than the first maximum torque transfer limit, such as 1 % to 300% larger, such as 10% to 200% larger, such as 0,1 % to 1% larger, such as 1% to 10% larger, such as 10% to 100% larger, such as 100% to 200%, such as 200% to 300%, such as 300% to 400%.

The difference in torque transfer limits established by the frictional contact between the member and the first and second elements, respectively, may be chosen so as to obtain different levels of protection of the torque consuming unit.

In one embodiment of the present invention the first element and/or the second element may be made from steel.

Other types of material may be envisioned, e.g. metals, alloy or other composite materials may be used.

In an advantageous embodiment of the present invention the member may be a flange and the first part is a first side of the flange and the second part is a second side of the flange opposite the first side.

A third aspect of the present invention relates to machine including a torque transferring arrangement or apparatus, which machine may be incorporated in a ships engine, a large vehicle, a windmill, a water turbine, an underwater turbine, a steam turbine or an electrical power generator.

Advantageously, the torque transfer apparatus as described in relation to the second aspect of the present invention may be used in a large construction, such as ships, hydroelectric plant, windmills or the like providing the security as described above. The torque transferring apparatus may of course be used in other contexts where it is desirable to limit the amount of torque transferred from a torque, generally the unit to a torque consuming unit.

A fourth aspect of the present invention relates to a frustro conical, constant sectional, compressive spring washer for tightly fitting around a circular shaft, the frustro conical spring washer comprising:
a body having first and second opposite, parallel, annular surfaces, delimited by respective inner and outer circles, and defining the constant cross section,
inner and outer surfaces, the inner surface connecting the first annular surface to the second annular surface at the inner circle and the outer surface connecting the first annular surface to the second annular surface at the outer circle, and
a circular line of rotation defined in the body thereby defining a centre of rotation of the constant cross-section of the body, the constant cross section being delimited at the inner surface by a section of a circle having its centre at the centre of rotation and a straight line so as to allow the body to rotate when compressed to maintain the inner surface in contact with the circular shaft.

The spring washer according to the fourth aspect of the present invention includes a part of the inner surface which allows the spring washer to have a degree of movement when the spring washer is mounted on an axle. The spring washer according to the fourth aspect of the present invention may be employed in e.g. the torque transferring apparatus described in relation to the second aspect of the present invention and also incorporated in the machine according to the third aspect of the present invention. The frustro conical, constant sectional, compressive spring washer according to the fourth aspect of the present invention may be used for keeping the torque transferring arrangement, as described in relation to the first aspect of the present invention, in place when mounted in a torque tranferring apparatus.

A fifth aspect of the present invention relates to a frustro conical, constant sectional, compressive spring washer for tightly fitting within a circular cylindrical recess, the frustro conical spring washer comprising:
a body having first and second opposite, parallel, annular surfaces, delimited by respective inner and outer circles, and defining the constant cross section,
inner and outer surfaces, the inner surface connecting the first annular surface to the second annular surface at the inner circle and the outer surface connecting the first annular surface to the second annular surface at the outer circle, and
a circular line of rotation defined in the body thereby defining a centre of rotation of the constant cross-section of the body, the constant cross section being delimited at the outer surface by a section of a circle having its centre at the centre of rotation and a straight line so as to allow the body to rotate when compressed to maintain the outer surface in contact with the circular cylindrical recess.

The spring washer according to the fifth aspect of the present invention includes a shaped outer surface allowing the spring washer to be mounted within a cylindrical tube and thereby allowing the spring washer to be mounted so as to keep a torque transferring arrangement comprised within a torque transferring apparatus in place. In an alternative embodiment of the present invention a frustro conical, constant sectional, compressive spring washer comprising an inner surface being delimited by the section of a circle and an outer surface delimited by the section of a circle, as described in relation to the fourth and the fifth aspects of the present invention: The alternative embodiment of the frustro conical, constant sectional, compressive spring washer thereby combines the features of the spring washer according to the fourth and fifth aspects, respectively. Such a spring washer may be mounted on an axle and fitted within a tube.

In one particular embodiment of the present invention the first and/or the second elements may be constituted by a frustro conical, constant sectional, compressive spring washer as defined above.

A sixth aspect of the present invention relates to a method for establishing a first maximum torque transfer limit and a second maximum torque transfer limit for a torque transferring arrangement. The torque transferring arrangement and the method according to the sixth aspect may include:
a member defining a first part and a second part,
a torque receiving element positioned in frictional contact with the first part,
a torque transmitting element positioned in frictional contact with the second part,
a first biasing element biasing the torque receiving element towards the member,
a second biasing element biasing the torque transmitting element towards the member,
establishing a first maximum torque transfer limit by setting the first biasing element, and
establishing a second maximum torque transfer limit by setting the second biasing element,
the second maximum torque transfer limit being larger than or substantially equal to the first maximum torque transfer limit.

A seventh aspect of the present invention relates to a method for establishing a first maximum torque transfer limit and a second maximum torque transfer limit for a torque transferring arrangement including:
a member defining a first part and a second part,
a torque receiving element positioned in frictional contact with the first part,
a torque transmitting element positioned in frictional contact with the second part,
a first biasing element biasing the torque receiving element towards the member,
a second biasing element biasing the torque transmitting element towards the member,
establishing a first maximum torque transfer limit by setting the first biasing element, and
establishing a second maximum torque transfer limit by setting the second biasing element,
the first maximum torque transfer limit being larger than or substantially equal to the second maximum torque transfer limit.

According to the basic teaching of the methods according to the sixth and the seventh aspect of the present invention, two torque transfer limits may be established. As discussed above, the torque transferring arrangement may be used in apparatuses and systems where there is a need for a torque limiting unit, limiting the amount of torque to be transferred from one apparatus to another. In the method according to the sixth aspect, the aim may be to establish torque transfer limits in a way to provide a torque transferring arrangement to protect a torque consuming unit receiving torque from the torque transferring arrangement.

In the method according to the seventh aspect, the aim may be to establish torque transfer limits in a way to provide a torque transferring arrangement to protect a torque generating unit transmitting torque to the torque transferring arrangement.

The method according to the sixth and seventh aspects may be used in relation to the first, second, third, fourth and/or fifth aspect of the present invention.

Aspects and advantages of the present invention will be evident from the description of an embodiment of the present invention with reference to the appended figures, in which:
Fig. 1 is an exploded view of a torque transferring apparatus,
Fig. 2 is a schematic view of a torque transferring arrangement,
Figs. 3 and 4 are schematic, cross-sectional views of the torque transferring arrangement,
Fig. 5 is a schematic view of a spring washer, and
Figs. 6 and 7 are schematic cross-sectional views of the spring washer of Fig. 5.

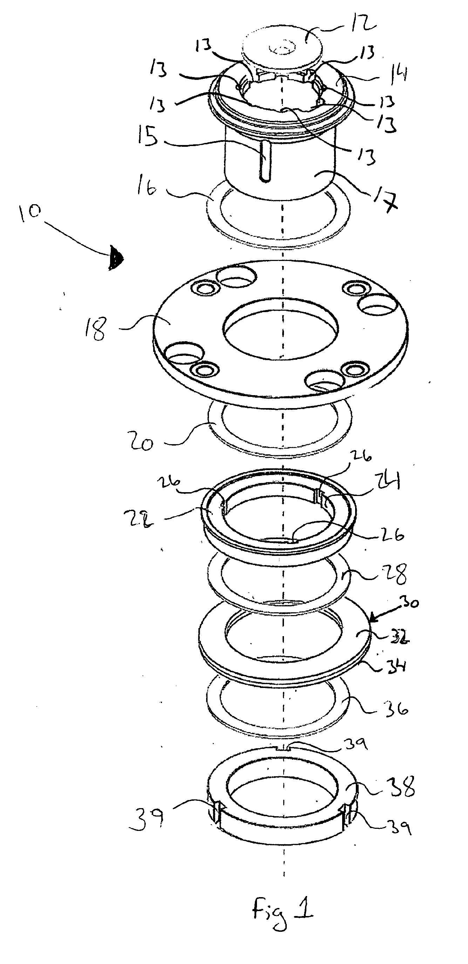

Fig. 1 is an exploded view of a torque limiting assembly generally denoted the reference numeral 10 for transferring torque from a torque generating device, such as a ships engine, a hydroelectric plant, a windmill, a water mill, a wave generator or any other torque generating device transferring torque in a rotational manner to a torque consuming device such as a generator, driving arrangements such as a ships screw or the like.

The assembly 10 comprises a lock disc 12. The lock disc 12 fixates the torque limiting assembly 10 to a generator axle, not illustrated, in a longitudinal direction. In the presently preferred embodiment of the present invention, the lock disc 12 is made from 52-3 steel and coated with ISO 14713C3 giving the lock disc 12 a very long service life.

The lock disc 12 is connected to a hub bushing 14. The hub 14 is preferably made from steel 60-2 with a coating of ISO14713C3 giving the hub 14 a very long service life. The hub 14 serves as a base for supporting parts of the torque limiting assembly 10. The hub 14 is mounted on a generator axle for transferring the torque or effect to the generator. The hub 14 includes keyways or grooves 15 for centring a first friction disc 16.

The grooves 13 in the hub 14 are used when mounting or assembling the assembly 10. Also, the grooves 13 may be used for adjusting the hub 14 in assembling and furthermore for test.

The surface 17 of the hub 14 serves as a centring surface for the flange 18 described below.

The friction disc 16 is located between the hub 14 and a flange 18 being a part of a torque transferring and limiting arrangement constituted by the friction disc 16, the flange 18 and a second friction disc 20. The torque transferring and limiting arrangement allows for a secure limitation the torque transferred from the torque generating unit to the torque consuming unit. The friction discs 16 and 20 serves the purpose of providing a friction element with a predefined friction coefficient. The friction discs 16 and 20 are preferably made from 52,3 steel, but other materials may be used where appropriate. The friction disc 16 transfers 2/3 of the torque, while the friction disc 20 transfers 1/3 of the torque.

The discs 16 and 20 abuts the flange 18 at parallel surfaces of the flange18 near the central opening of the flange 18. At either side of the flange 18 contact areas are defined. The contact areas are the areas where the flange 18 and the discs 16 and 20 are in facial contact.

The under side of the rim of the hub 14 abut the disc 16, thereby defining a first friction interface, a second friction interface is defined between the disc 16 and the flange 18. A third friction interface is defined between the flange 18 and the disc 20. A fourth friction interface is defined between the disc 20 and the pressure ring or thrust collar 22 described below.

The flange 18 furthermore retains a slide bearing, not illustrated, which help centre the flange relative to the hub 14. The slide bearing is a guiding ribbon made from polyetraflourethylene/bronze/graphite mixture.

The assembly further comprises a pressure ring or thrust collar 22. The pressure ring 22 serves the function of centring the second friction disc 20 and centring a relief disc 28. The relief disc 28 is made from steel, 16MnCr5. The slide bearing described above is positioned at the inner surface 24 of the pressure ring 22. In one embodiment, the relief disc may be omitted, and the surfaces of the pressure ring 22 and the spring nut 38 may instead be hardened.

The pressure ring 22 further includes grooves, all denoted the reference numeral 26, for transferring torque to the hub 14 using three wedges or guides, not illustrated. The guides also serve to centre the spring discs described below. Furthermore, the pressure ring 22 includes a rim for providing a measuring surface for control measuring ensuring that the assembly is correctly assembled.

The assembly 10 further comprises two frustro conical, constant sectional, compressive spring washers 32 and 34 lying against each other and the assembly is designated the reference numeral 30.

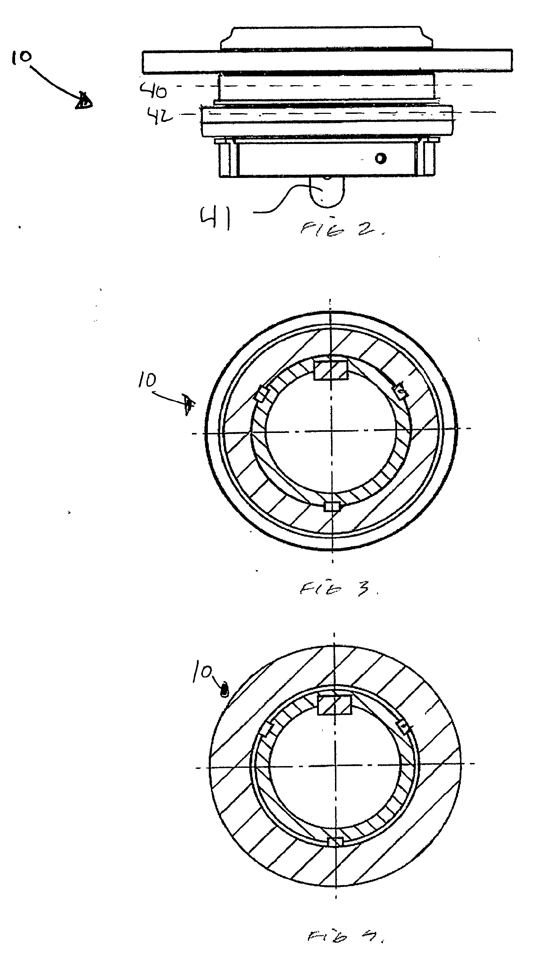

The spring washers 32 and 34 will be described in greater detail with reference to the Figs. 5-7 below.

When the spring washers 32 and 34 are centred externally, the relief disc 28 may be dispensed with.

The pressure ring 22 transfers pressure from the two frustro conical, constant sectional, compressive spring washers 32 and 34 to the friction discs 16 and 20. Also, the pressure ring 22 transfers torque from second friction disc 20 to the hub 14 via the three wedges as described above. In an alternative embodiment of an apparatus according to the present invention, a different number of wedges may be used. In a specific embodiment of the present invention, the wedged may be dispensed with, i.e. no wedges are used. In such an embodiment, the spring disc may be centred by e.g. the hub.

Below the spring washers 32 and 34 a second relief disc is mounted. The relief disc 36 is of the same type as the relief disc 28 described above. The relief discs 36 acts as a compression member between the spring washer 34 and the spring nut 38.
The hardening of the relied disc prevent deformation of the spring nut and the spring washer.

At the bottom of the assembly 10 a spring nut 38 is mounted. The spring nut serves to centring of the relief disc 36 as well as to harness or bias the spring washers 32 and 34. Still further, the spring nut assists in maintaining a constant axial placement of the assembly on a drive axle. Even still further, the spring nut provides a second measuring surface for control measuring of the displacement of the spring washers.

The spring nut 38 includes millings 39 for receiving thread locks allowing the spring nut 38 to be securely mounted to the hub 14.

Fig. 2 schematically illustrates the assembly 10, wherein the various parts shown in Fig. 1 has been assembled.

A key generator 41 is seen extending from the assembly 10. The key generator transfer forces and/or torque between the generator axle and the hub 14.

Fig. 3 is a cut-through view of the assembly 10 at the line 40 and Fig. 4 is a schematic cross-sectional view of the assembly 10 taken at the line 42.

Fig. 5 is a schematic view of the spring washer 32 shown in Fig. 1. The spring washer 32 comprises a tubular body having a central opening 44.The opening 44 is defined by a inner wall 46. The spring washer 32 is preferably made from a metallic material, and may include a coating for increasing the service life of the spring washer 32. In the presently preferred embodiment of the present invention the spring washer is made from 51CrV4/1.8159 steel, and is coated according to ISO 14713C3 giving the spring washer a very long service life. In other embodiments, the material may be replaced by e.g. 50CrV4 or other suitable materials.

The assembly 10 shown in fig 1 includes two such spring washers, 32 and 34. The spring washers serve to keep the member and friction discs in place. The spring washer exert a force on the frictions discs. The spring washers maintain a constant outer and inner diameter, regardless of the size of the axial force exerted on them. The thickness and/or width of the spring washer may be chosen based on type of use.

The spring washer 32 is a frustro conical, constant sectional, compressive spring washer, and is adapted to tightly fit around a circular shaft. Also, the spring washer is adapted to tightly fit within a circular cylindrical recess.

The body of the spring washer 32 further more has first and second opposite, parallel, annular surfaces, delimited by respective inner and outer circles, and defines a constant cross section.

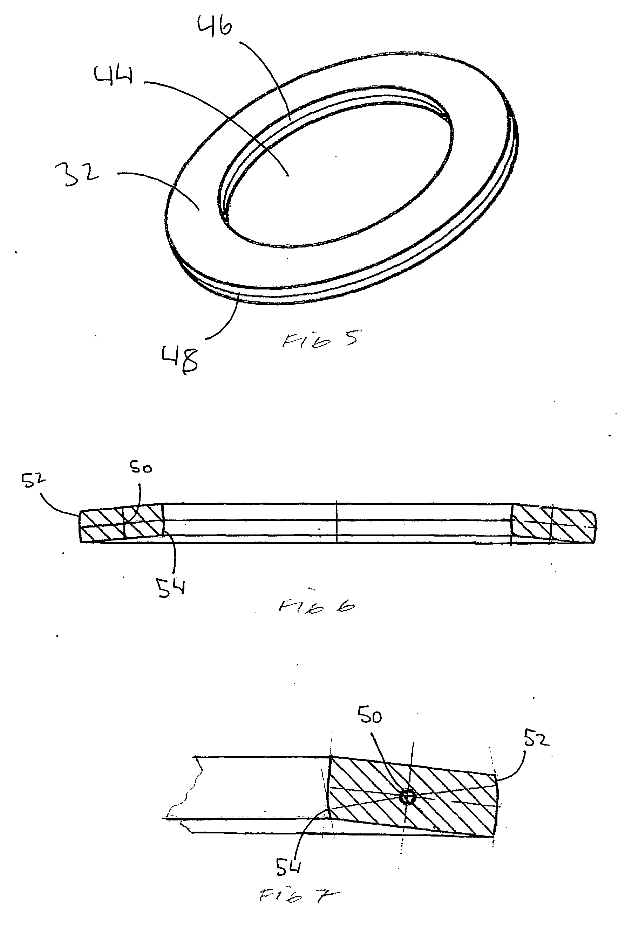

As seen from Fig. 6, and in detail in Fig. 7, a circular line of rotation is defined in the body thereby defining a centre of rotation 50 of the constant cross-section of the body. The constant cross section being delimited at the inner surface by a section of a circle 54 having its centre at said centre of rotation and a straight line so as to allow the body to rotate when compressed to maintain the inner surface in contact with the circular shaft.

When the spring washer 32 is under pressure from one of the other components of the assembly, the shape of the spring washer 32, as described above, allows the spring washer 32 to rotate or pivot at the centre of rotation at 50. The rounded corner or surface 52 ensures that the spring washer is constantly in contact with the inner wall of a tube or pipe wherein the assembly is mounted. Similarly, the rounded corner or outer surface 54 ensures that the spring washer is maintained in constant contact with the torque transferring axle on which the assembly 10 is mounted.

The corners 52 and 54 are rounded in a special manner, as described above, ensuring that at no point in time is any contact between the elements and the axle lost. This is contemplated to provide a safe manner to mount an assembly 10.

The radius at the inner side ensures that a constant inner diameter is maintained regardless of the load on the spring washer. The radius at the outer side ensures that a constant outer diameter is maintained regardless of the load on the spring washer. The radius at the inner and outer sides ensures that a constant inner and outer diameters are maintained regardless of the load on the spring washer. As seen from Fig. 7, the centre of rotation is positioned not a the centre of the cross-section of the spring washer providing a difference in the inner and outer radius.

A prototype version of an apparatus according to the teachings of the present invention was implemented. The prototype comprised the following:
Lock disc, made from 52,3 steel, with ISO 14713C3 coating. Outer diameter of 129,5 mm, inner diameter of 25 mm and largest diameter of angled aperture 42 mm.

A hub made from steel, 52,3. The outer diameter was 226 mm, with 45 degrees between grooves. The inner diameter of the opening was 120 mm.

A first friction disc made from SA-92. An outer diameter of 220 and inner diameter of 176,5. Thickness of 5 mm.

A flange made from steel, 52-3 with a coating of ISO 14713C3. The flange had a diameter of 395 mm. Four large apertures having an inner diameter of 60 mm and four smaller apertures having a diameter of 25 mm. The thickness of the flange was 25 mm.

A second friction disc made from bronze ampco 18. Having an outer diameter of 220 mm and an inner diameter of 176,5 mm.

A pressure ring made from 52-3 steel. The pressure ring had an outer diameter of 240 mm, a diameter of 230 mm below the rim and an inner diameter of 220,5 mm. The pressure ring further had three grooves positioned at 120 degrees distance. Each groove had a width of 16 mm.

Two relief discs made from steel, 16MnCr5. Each of the relief discs had an outer diameter of 220,5 mm, an inner diameter of 180 m and a thickness of 5 mm.

Two spring discs, each having an outer diameter of 268,7 mm and a height of 20,5 mm at a load of 750 N. The cross-sectional size of the spring disc was 16,5 mm x 44.3 mm. The distance from the edge of the side wall to the centre of rotation was 20,96 mm in one direction and 8,25 mm in the other direction. The distance from the centre of rotation to the first curved surface was 23,36 mm and the distance from the centre of rotation to the second curved surface was 20,96 mm.

A spring nut made from 52-3 steel. The spring nut had an outer diameter of 240 mm, a diameter of 230 mm below the rim and an inner diameter of 170 mm. The spring nut comprised three grooves having a width of 20 mm. The distance between the grooved was 120 degrees. The width of the spring nut was 43 mm, the width of the rim was 3 mm.

Three key generators made from steel, C45K. The each of the key generators included two apertures positioned with a distance of 121 mm, with one aperture positioned 36 mm from the bottom. The key generator had a thickness of 36 mm and a width of 20 mm.

A spring disc guide made from steel, C45K. The spring disc guide had the measurements 16 mm x 9,5 mm x 70 mm.

Thread locks made from brass. The thread lock had a cylindrical geometry with a diameter of 8,5 mm and a length of 10 mm.

A Slide-bearing having a thickness of 2 mm, a diameter of 176 mm and a height of 29,8 mm. The slide bearing was made mainly from teflon.

It is contemplated that the materials mentioned may be exchanged with other suitable materials.

## Claims

1. A torque transferring arrangement including:
a member defining a first part and a second part,
a first element in frictional contact with said first part, said first element defining a first maximum torque transfer limit determined by said frictional contact between said first element and said first part,
a second element in frictional contact with said second part, said second element defining a second maximum torque transfer limit determined by said frictional contact between said second element and said second part being larger than or substantially equal to said first frictional coefficient, and
said first element receiving torque from a torque generating unit, said second element transferring torque to a torque consuming unit.

2. An torque transferring apparatus transferring torque from a torque generating unit to a torque consuming unit, said apparatus mechanically limiting the maximum torque transferred,
said apparatus defining a torque inlet for receiving torque from said torque generating unit and a corresponding torque outlet for transferring torque to said torque consuming unit, said apparatus comprising:
a torque transferring arrangement including:
• a member defining a first part and a second part,
• a first element in frictional contact with said first part, said first element defining a first maximum torque transfer limit determined by said frictional contact between said first element and said first part,
• a second element in frictional contact with said second part, said second element defining a second maximum torque transfer limit determined by said frictional contact between said second element and said second part being larger than or substantially equal to said first frictional coefficient,
a torque transfer path being defined from said torque inlet to said torque outlet, via said torque transferring arrangement by firstly said first element, secondly said member and thirdly said second element.

3. The torque transferring apparatus according to claim 1 or 2, wherein said first maximum torque transfer limit and said second maximum torque transfer limit is further determined by the frictional coefficient defined between said member and said first and second elements, respectively.

4. The torque transferring apparatus according to any of the claims 2-3, wherein said second maximum torque transfer limit is 0,1% to 400% larger than said first maximum torque transfer limit, such as 1% to 300% larger, such as 10% to 200% larger, such as 0,1 % to 1% larger, such as 1% to 10% larger, such as 10% to 100% larger, such as 100% to 200%, such as 200% to 300%, such as 300% to 400%.

5. The torque transferring apparatus according to any of the claims 2-4, wherein said first element and/or said second element is made from steel.

6. The torque transferring apparatus according to any of the claims 2-5, wherein said member is a flange and said first part is a first side of said flange and said second part is a second side of said flange opposite said first side.

7. A machine including a torque transferring arrangement or apparatus according to any of the claims 1-6, said machine is incorporated in a ships engine, a large vehicle, a hydroelectric plant, a windmill, a water turbine, an underwater turbine or an electrical power generator.

8. A frustro conical, constant sectional, compressive spring washer for tightly fitting around a circular shaft, said frustro conical spring washer comprising:
a body having first and second opposite, parallel, annular surfaces, delimited by respective inner and outer circles, and defining said constant cross section,
inner and outer surfaces, said inner surface connecting said first annular surface to said second annular surface at said inner circle and said outer surface connecting said first annular surface to said second annular surface at said outer circle, and
a circular line of rotation defined in said body thereby defining a centre of rotation of said constant cross-section of said body, said constant cross section being delimited at said inner surface by a section of a circle having its centre at said centre of rotation and a straight line so as to allow said body to rotate when compressed to maintain said inner surface in contact with said circular shaft.

9. A frustro conical, constant sectional, compressive spring washer for tightly fitting within a circular cylindrical recess, said frustro conical spring washer comprising:
a body having first and second opposite, parallel, annular surfaces, delimited by respective inner and outer circles, and defining said constant cross section,
inner and outer surfaces, said inner surface connecting said first annular surface to said second annular surface at said inner circle and said outer surface connecting said first annular surface to said second annular surface at said outer circle, and
a circular line of rotation defined in said body thereby defining a centre of rotation of said constant cross-section of said body, said constant cross section being delimited at said outer surface by a section of a circle having its centre at said centre of rotation and a straight line so as to allow said body to rotate when compressed to maintain said outer surface in contact with said circular cylindrical recess.

10. The torque transferring apparatus according to any of the claims 1-7, wherein said first and/or said second elements are constituted by a frustro conical, constant sectional, compressive spring washer as defined in claims 8 and/or 9.

11. A method for establishing a first maximum torque transfer limit and a second maximum torque transfer limit for a torque transferring arrangement including:
a member defining a first part and a second part,
a torque receiving element positioned in frictional contact with said first part,
a torque transmitting element positioned in frictional contact with said second part,
a first biasing element biasing said torque receiving element towards said member,
a second biasing element biasing said torque transmitting element towards said member,
establishing a first maximum torque transfer limit by setting said first biasing element, and
establishing a second maximum torque transfer limit by setting said second biasing element,
said second maximum torque transfer limit being larger than or substantially equal to said first maximum torque transfer limit.

12. A method for establishing a first maximum torque transfer limit and a second maximum torque transfer limit for a torque transferring arrangement including:
a member defining a first part and a second part,
a torque receiving element positioned in frictional contact with said first part,
a torque transmitting element positioned in frictional contact with said second part,
a first biasing element biasing said torque receiving element towards said member,
a second biasing element biasing said torque transmitting element towards said member,
establishing a first maximum torque transfer limit by setting said first biasing element, and
establishing a second maximum torque transfer limit by setting said second biasing element,
said first maximum torque transfer limit being larger than or substantially equal to said second maximum torque transfer limit.

13. The method according to clam 11 or 12, wherein said torque transferring arrangement comprises any of the features of any of the claims 1-10.
